# EUROPEAN PATENT APPLICATION

(11) **EP 3 505 452 A1**
(43) Date of publication of application: **03.07.2019**
(21) Application number: 17869047.5
(22) Date of filing: 14.09.2017
(51) Int. Cl.: B64D 47/08, B64C 27/08, B64C 39/02, F16F 1/36, F16F 15/02, F16F 15/08, G03B 15/00, G03B 17/02, G03B 17/56

(54) **VIBRATION CONTROL DEVICE AND UNMANNED AIRCRAFT**

(30) Priority: 09.11.2016 JP 2016218914
(71) Applicant: Sekisui Polymatech Co., Ltd., Saitama-city, Saitama 338-0837 (JP)
(72) Inventor: FUKUOKA Tatsuya, Saitama-city Saitama 338-0837 (JP)
(74) Representative: Schmid, Wolfgang
(86) International application number: PCT/JP2017/033357
(87) International publication number: WO 2018/088028

(57) **Abstract**

There are provided an antivibration device and an unmanned aircraft equipped with the antivibration device. The antivibration device exhibits an excellent vibration attenuation effect for a small-size and lightweight imaging device mounted on the unmanned aircraft. An antivibration device 12 is attached to an imaging device 11 mounted on an unmanned aircraft 1. The antivibration device 12 includes an inner fixing portion 15 attached to the imaging device 11, an outer fixing portion 16 attached to a main body 2 of the unmanned aircraft 1, and a plurality of elastic support arms 17 that are made of a rubber-like elastic body. The elastic support arms 17 extend radially with the imaging device 11 being at the center and elastically support the imaging device 11 in the three-dimensional directions with respect to the main body 2.

## Description

### Technical Field

The present invention relates to an antivibration technique for an imaging device disposed in an unmanned aircraft.

### Background Art

In recent years, technology related to unmanned aircrafts has been rapidly developed, and aerial imaging can be conducted easily by using an unmanned aircraft on which an imaging device such as a small-size video camera is mounted. As compared to manned aircrafts, such an unmanned aircraft is made small and lightweight and needs to be even lighter to fly more efficiently at a lower power output. Accordingly, an imaging device mounted thereon is also desired to be smaller and lighter. A small-size and lightweight imaging device is vulnerable to the influence of vibrations and changing flying postures of the unmanned aircraft during flight, which raises an issue of reducing vibrations.

For example, as antivibration measures for an imaging device mounted on an unmanned aircraft, Japanese Unexamined Patent Application Publication No. 2015-209207 (PTL 1) describes an example in which an imaging device is fixed to a panel that is disposed on intermediate elastic spacers made of an elastomer material.

### Citation List

### Patent Literature

PTL 1: Japanese Unexamined Patent Application Publication No. 2015-209207

### Summary of Invention

### Technical Problem

In the technique described in PTL 1, intermediate elastic spacers that are made of an elastomer and formed into thick pieces serve to provide an antivibration effect by elastically supporting a panel and a target object of antivibration, such as a camera. The intermediate elastic spacers exhibit a vibration attenuation effect by deforming in response to an inertial force based on the weight of the object of antivibration. Consequently, if the object of antivibration is light, the intermediate elastic spacers do not deform sufficiently against vibrations generated by an unmanned aircraft because it is difficult to adjust the hardness of the intermediate elastic spacers. As a result, vibrations tend to be transmitted readily to the object of antivibration. This phenomenon is conspicuous at low vibration frequencies, for example, approximately 30 Hz, which needs to be addressed especially for a multicopter-type unmanned aircraft.

In place of the above-described intermediate elastic spacers that are made of an elastomer and formed into thick pieces, for example, a soft gel may be used to elastically support an imaging device with respect to a supported body. However, according to the study by the inventors, when a gel being hard enough to support an imaging device is used, the gel cannot exhibit a vibration attenuation effect sufficiently for vibrations in a low frequency range including about 30 Hz. On the other hand, if a gel is too soft to support an imaging device, a problem may occur in accurate positioning of the imaging device or in durability. Moreover, the gel deforms by its own weight and cannot maintain the original shape, which makes it difficult to exhibit the initial antivibration effect constantly.

Accordingly, the present invention is made with the above known arts as background. An object of the invention is to provide an antivibration device applicable to an imaging device that is mounted on an unmanned aircraft and is expectedly made small and lightweight.

### Solution to Problem

To achieve the above object, the present invention provides an antivibration device and an unmanned aircraft as described below.

The antivibration device for an imaging device mounted on an unmanned aircraft includes an inner fixing portion to be fitted on the imaging device, an outer fixing portion to be mounted on an airframe of the unmanned aircraft, a plurality of elastic support arms that are made of rubber-like elastic body and that connect the inner fixing portion and the outer fixing portion to each other. In the antivibration device, the elastic support arms extend radially with the imaging device being at a center and elastically support the imaging device with respect to the airframe.

In the process of creating the invention, the inventors has studied viability of antivibration structures that elastically supports an imaging device from below or laterally. However, these antivibration structures are based on an antivibration device that provides strength so as to support the weight of the imaging device. When such an antivibration device is applied to a lightweight imaging device, the inertial force based on the weight of the imaging device is small and accordingly the antivibration device cannot elastically deform sufficiently. As a result, a desired vibration attenuation effect was not obtained. On the other hand, an antivibration structure that elastically support an imaging device by suspending the imaging device from above cannot always provide a sufficient vibration attenuation effect because the imaging device is likely to swing like a pendulum. Alternatively, an antivibration structure in which the imaging device is suspended vertically from above by using a coil spring and an antivibration device is disposed vertically below the imaging device can exhibit a desired antivibration effect when the airframe of an unmanned aircraft is oriented horizontally. However, when the orientation of the airframe changes largely, this structure cannot exhibit the desired antivibration effect. The inventors has reached a conclusion that the antivibration structures based on the above-described antivibration devices studied in the process of creating the invention are not viable for suppressing the vibration of an imaging device that is expectedly designed to be small and lightweight.

On the other hand, the antivibration device according to the present invention includes an inner fixing portion to be fitted on the imaging device, an outer fixing portion to be mounted on an airframe of an unmanned aircraft, and a plurality of elastic support arms that are made of a rubber-like elastic body and that connect the inner fixing portion and the outer fixing portion to each other. The elastic support arms extend radially with the imaging device being at the center and thereby support the imaging device elastically with respect to the airframe. Due to the elastic support arms being formed of the rubber-like elastic body, the elastic support arms can be stretched flexibly without anisotropy in the three-dimensional directions with respect to the outer fixing portion, in other words, with respect to a fixed point. If a coil spring is used, the coil spring behaves differently in stretching in the axial direction and in stretching in a warping manner relative to the spring axis and accordingly is not expected to exhibit stretching deformation without anisotropy in the three-dimensional directions. A plurality of the elastic support arms, which are formed radially, suspend the imaging device from above and underpin the imaging device from below so that the imaging device is supported elastically by the elastic support arms in the three-dimensional directions with the imaging device positioned at the center. Thus, the small-size and lightweight imaging device mounted on the unmanned aircraft that may assume various flying postures can be supported appropriately in a vibration-proof manner.

A plurality of the elastic support arms may be disposed radially and spaced from each other at regular intervals. With this configuration, the elastic support arms can elastically support the imaging device in radial directions with the imaging device at the center. The imaging device can be supported in a balanced and vibration-proof manner even if the unmanned aircraft assumes various flying postures.

The rubber-like elastic body may have a rubber hardness of E5 to A80 according to JIS K6253. The rubber-like elastic body having a hardness of E5 does not raise a concern for the durability and is not likely to deform by its own weight. This type of rubber-like elastic body exhibits an excellent vibration attenuation effect for a lightweight imaging device having a weight of 1 to 70 g approximately.

The inner fixing portion, the plurality of elastic support arms, and the outer fixing portion may be disposed in one plane. Accordingly, even if the unmanned aircraft assumes various flying postures, the imaging device can be supported in a vibration-proof manner in a single plane. As a result, even if the flying posture rotatably changes in the single plane, the imaging device does not move largely, which can eliminate the necessity of the space allowing for the movement of the imaging device in the single plane.

The inner fixing portion may be attached to the imaging device at a position of center of gravity of the imaging device. This can reduce unnecessary deformation of the antivibration device due to deviation from the center of gravity and enables the antivibration device to exhibit a vibration attenuation effect more appropriately.

The plurality of elastic support arms may be constituted by an upward-extending elastic arm that extends upward from the inner fixing portion in a vertical direction of the unmanned aircraft and that suspends the imaging device and thereby supports the imaging device from above and also by a downward-extending elastic arm that extends downward from the inner fixing portion and supports the imaging device from below. With this configuration, the upward-extending elastic arm stretches and thereby supports the load of the imaging device while the downward-extending elastic arms are compressed and thereby support the imaging device from below. Accordingly, even if the elastic support arms are made of a soft rubber-like elastic body, the elastic support arms can provide bearing capacity in collaboration with each other and support the imaging device appropriately in a vibration-proof manner.

The elastic support arms may be formed into serpentine shapes. With this configuration, compared with the elastic support arms having straight columnar shapes, the elastic support arms can elastically deform more flexibly for a lightweight imaging device due to the serpentine shape with a repetitive bending pattern.

An unmanned aircraft according to the invention includes an airframe, an imaging device mounted on the airframe, and an antivibration device disposed between the airframe and the imaging device. In the unmanned aircraft, the antivibration device includes an inner fixing portion to be fitted on the imaging device, an outer fixing portion to be mounted on the airframe, and a plurality of elastic support arms that are made of a rubber-like elastic body and that connect the inner fixing portion and the outer fixing portion to each other. The elastic support arms extend radially with the imaging device being at the center and elastically support the imaging device with respect to the airframe.

With this configuration, as described as an advantageous effect in relation to the antivibration device, the unmanned aircraft that can support the imaging device mounted thereon appropriately in a vibration-proof manner even if the unmanned aircraft assumes various flying postures can be provided.

The airframe may be a multicopter. In recent years, among various types of unmanned aircrafts, a multicopter-type unmanned aircraft has been used widely in many fields. With this configuration, the multicopter-type unmanned aircraft can support the imaging device mounted thereon appropriately in a vibration-proof manner.

### Advantageous Effects of Invention

According to the antivibration device of the invention, the small-size and lightweight imaging device mounted on the unmanned aircraft that may assume various flying postures can be supported appropriately in a vibration-proof manner. Accordingly, the antivibration device of the invention can protect, from vibrations, the imaging device that receives vibrations during flight and can thereby improve the durability of the imaging device and the imaging quality of still images as well as video images.

According to the unmanned aircraft of the invention, the unmanned aircraft can support the small-size and lightweight imaging device mounted thereon appropriately in a vibration-proof manner even if the unmanned aircraft assumes various flying postures. Accordingly, the unmanned aircraft of the invention can protect, from vibrations, the imaging device that receives vibrations during flight and can thereby improve the durability of the imaging device and the imaging quality of still images as well as video images.

### Brief Description of Drawings

[Fig. 1] Fig. 1 is a plan view schematically illustrating an unmanned aircraft according to an embodiment.
[Fig. 2] Fig. 2 is a diagram schematically illustrating an inside structure of a main body that is cut along line II-II in Fig. 1.
[Fig. 3] Fig. 3 is a cross section of an imaging unit of Fig. 2, which is cut along line III-III in Fig. 4.
[Fig. 4] Fig. 4 is a side view illustrating the imaging unit of Fig. 3 as viewed from the right side in Fig. 3.
[Fig. 5] Fig. 5 is a diagram illustrating the antivibration device of Fig. 3, in which view (a) is a cross section when the antivibration device is cut along line V-V in view (b) and view (b) is a front view of the antivibration device.
[Fig. 6] Fig. 6 is a front view illustrating an antivibration device according to modification example 1.
[Fig. 7] Fig. 7 is a front view illustrating an antivibration device according to modification example 2.
[Fig. 8] Fig. 8 is a front view illustrating an antivibration device according to modification example 3.
[Fig. 9] Fig. 9 is a front view illustrating an antivibration device according to modification example 4.
[Fig. 10] Fig. 10 is a cross-sectional view illustrating an imaging unit according to a modification example, the cross-sectional view being equivalent to that in Fig. 3.
[Fig. 11] Fig. 11 is a cross-sectional view illustrating an imaging unit according to another modification example, the cross-sectional view being equivalent to that in Fig. 3.

### Description of Embodiment

An embodiment according to the invention will be described with reference to the drawings. Note that regarding materials, compositions, manufacturing methods, operation, and effects in different embodiments, duplicated description will be omitted if they are identical.

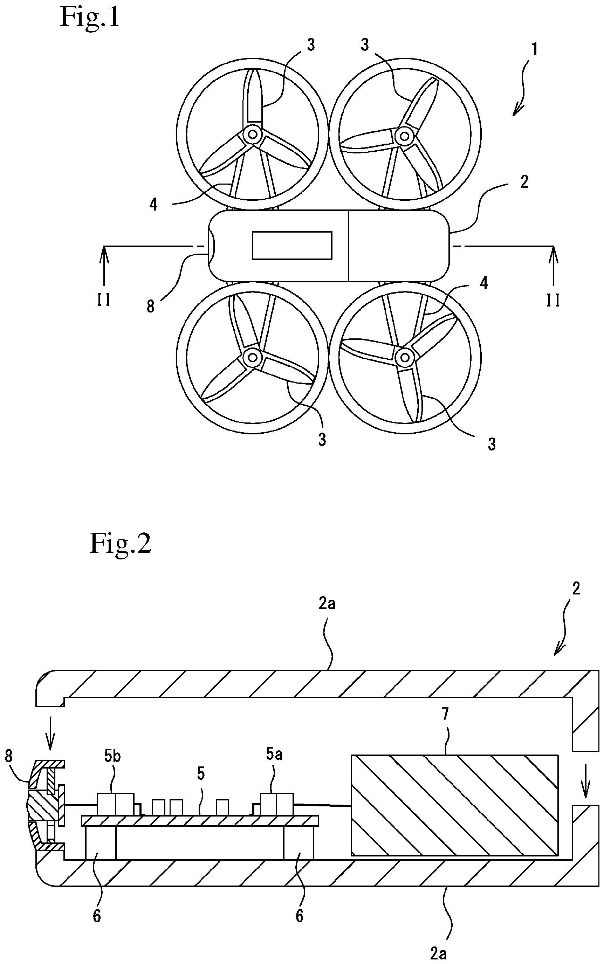

Fig. 1 is a schematic plan view illustrating an unmanned aircraft 1. The unmanned aircraft 1 is a type having a multicopter type airframe. The unmanned aircraft 1 includes a main body 2. The main body 2 includes arms 4 each of which protrudes sideways and has a rotor 3. A motor (not illustrated) for rotatably driving the rotor 3 is disposed under the rotor 3. The "airframe" according to the invention is constituted by the main body 2, the arms 4, and the rotors 3.

Fig. 2 schematically illustrates the internal structure of the main body 2. As illustrated, a control board 5 is mounted in a housing 2a via columnar antivibration members 6. A battery pack 7 and an imaging unit 8 are connected to the control board 5 via respective connectors 5a and 5b.

Because of this structure, the control board 5 is isolated from the housing 2a by the antivibration members 6, and thereby vibrations generated in the main body 2 during, for example, flight of the unmanned aircraft 1 are not transmitted easily to the control board 5. Accordingly, the control board 5 is protected from the vibrations.

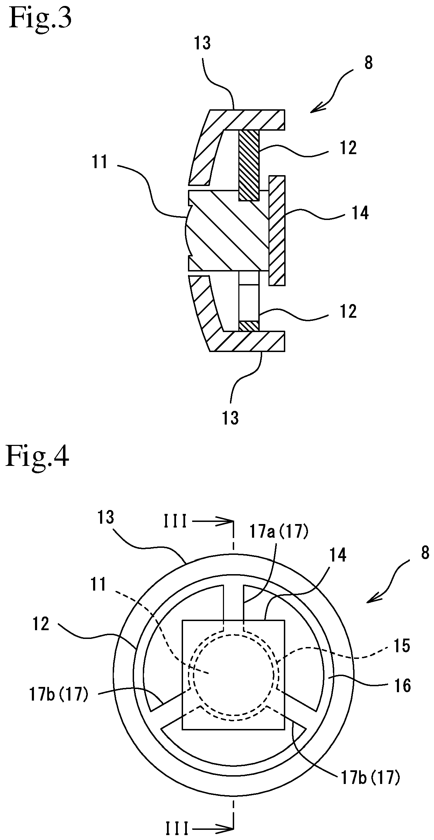

Figs. 3 and 4 schematically illustrate the structure of the imaging unit 8. As illustrated, the imaging unit 8 is formed as a unit that includes an imaging device 11, an antivibration device 12, and a housing 13. The imaging device 11 includes an imaging board 14, as a major component, on which a lens and an imaging element such as a complementary metal oxide semiconductor (CMOS) are mounted. In the imaging unit 8, the antivibration device 12 is attached to the imaging device 11 at a position of the center of gravity of the imaging device 11. The antivibration device 12 is also attached to the housing 13 so as to position the imaging device 11 in a middle region in the housing 13. Accordingly, mounting the antivibration device 12 on the imaging device 11 at the position of the center of gravity thereof can reduce unnecessary deformation of the antivibration device 12 due to deviation from the center of gravity and enables the antivibration device 12 to exhibit a vibration attenuation effect more appropriately.

A lightweight imaging device 11 having a weight of approximately 1 to 70 g can be used. In the case of a lightweight imaging device 11 that weighs 1 g or less, the antivibration members 6 that support the imaging device 11 in a vibration-proof manner cannot provide the imaging device 11 with a sufficient vibration attenuation effect. In this case, by using an antivibration device 12 that is suitable for the lightweight imaging device 11, the imaging unit 8 can support the imaging device 11 appropriately in a vibration-proof manner.

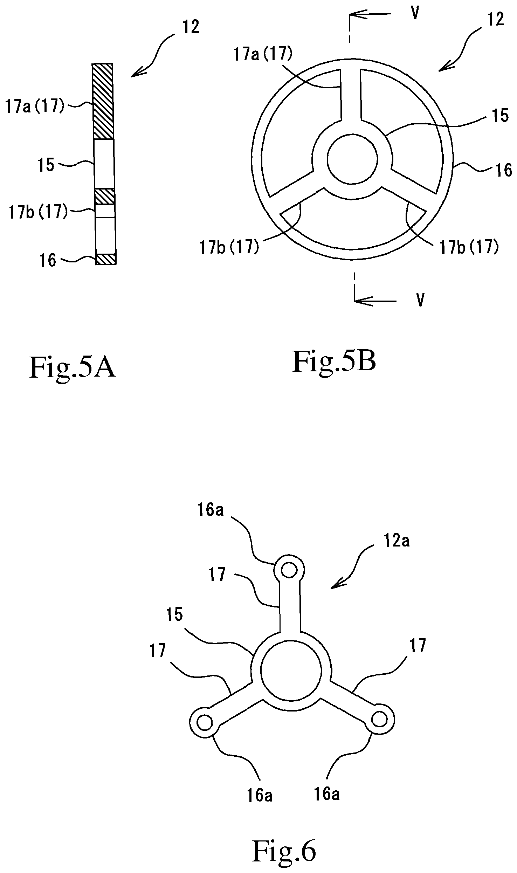

As illustrated in Fig. 5, the antivibration device 12 includes an inner fixing portion 15 onto which the imaging device 11 is to be mounted, an outer fixing portion 16 that is located outward from the inner fixing portion 15 and is to be fixed to the housing 13, and a plurality of elastic support arms 17 that connect the inner fixing portion 15 and the outer fixing portion 16 to each other.

The inner fixing portion 15 is disposed at the center of the antivibration device 12 and is formed into a circular ring. Since the inner fixing portion 15 is shaped like a ring, the imaging device 11 can be fixed to the antivibration device 12 easily by simply causing the imaging device 11 having a groove on the outer periphery thereof to be fitted into the inner fixing portion 15. The elastic support arms 17 extend outward from a single inner fixing portion 15. Accordingly, a plurality of the elastic support arms 17 can be fixed to the imaging device 11 simultaneously in an efficient manner in a single fitting process of the inner fixing portion 15 onto the imaging device 11.

A plurality of the elastic support arms 17 extend radially from the inner fixing portion 15 in one plane. Accordingly, even if the unmanned aircraft 1 assumes various flying postures, the imaging device 11 can be supported in a vibration-proof manner in a single plane. Accordingly, even if the flying posture rotatably changes in the single plane, the imaging device 11 does not move largely, which can eliminate the necessity of the space allowing for the movement of the imaging device 11 in the plane and thereby leads to a reduction in the size of the imaging unit 8. The elastic support arms 17 are disposed at regular intervals and are spaced from each other by 120 degrees. Arranging the elastic support arms 17 radially at regular intervals enables the elastic support arms 17 to elastically support the imaging device 11 in radial directions with the imaging device 11 at the center. The imaging device 11 can be supported in a balanced and vibration-proof manner even if the unmanned aircraft 1 assumes various flying postures.

The outer fixing portion 16 disposed at the outer periphery of the antivibration device 12 is a portion for fixing the antivibration device 12 to the housing 13 and is shaped into a ring that is larger than, and concentric with, the inner fixing portion 15. The outer fixing portion 16 being shaped into a ring not only serves as a portion to be fixed to the housing 13 but also serves supplementarily to keep the ends of the elastic support arms 17 equidistant from each other. In other words, even if the outer fixing portion 16 is made of a soft material, the outer fixing portion 16 can suppress displacement of each elastic support arm 17 in the extending direction, which can reliably provide the vibration attenuation effect for the imaging device 11 fixed to the inner fixing portion 15. A double-sided adhesive tape is used to fix the outer fixing portion 16 to the housing 13.

The antivibration device 12 according to the present embodiment is formed integrally of a rubber-like elastic body by molding. Due to the elastic support arms 17 being formed of the rubber-like elastic body, the elastic support arms 17 can be stretched flexibly without anisotropy in the three-dimensional directions with respect to the outer fixing portion 16. If a coil spring is used, the coil spring behaves differently in stretching in the axial direction and in stretching in a warping manner relative to the spring axis and accordingly is not expected to exhibit stretching deformation without anisotropy in the three-dimensional directions. Thus, the elastic support arms 17 is formed of a rubber-like elastic body. Examples of the rubber-like elastic body are a synthetic rubber and a thermoplastic elastomer (TPE). More specifically, silicone rubber, urethane rubber, butyl rubber, chloroprene rubber, nitrile rubber, ethylene-propylene rubber, or the like, may be used as the synthetic rubber. In addition, thermoplastic styrenic elastomer, thermoplastic olefinic elastomer, thermoplastic polyurethane elastomer, thermoplastic polyester elastomer, or the like, may be used as the thermoplastic elastomer (TPE).

From a viewpoint of vibration attenuation performance, it is preferable to use a rubber-like elastic body, among those listed above, that has a rubber hardness of E5 to A80 according to JIS K6253. If the rubber hardness is less than E5, a concern for durability arises. Moreover, the antivibration device 12 may deform by its own weight. On the other hand, if the rubber hardness exceeds A80, the vibration attenuation effect may not be obtained sufficiently.

In the state in which the antivibration device 12 is attached to the imaging device 11 and the housing 13 that is installed in the unmanned aircraft 1, in other words, in the state in which the imaging device 11 is held inside the housing 13, an elastic support arm 17 extending vertically upward of the imaging device 11 (i.e., an upward-extending elastic arm 17a) is stretched by the weight of the imaging device 11, while two elastic support arms 17 extending obliquely downward of the imaging device 11 (i.e., downward-extending elastic arms 17b) are compressed. In other words, a plurality of the elastic support arms 17, which are formed radially, suspend the imaging device 11 from above and underpin the imaging device 11 from below so that the imaging device 11 is supported elastically by the elastic support arms 17 in the three-dimensional directions with the imaging device 11 located at the center. Thus, the small-size and lightweight imaging device 11 mounted on the unmanned aircraft 1 that may assume various flying postures can be supported appropriately in a vibration-proof manner. The elastic support arms 17 are configured such that two elastic arms are provided as the downward-extending elastic arms 17b on which the load of the imaging device 11 and gravity act while a single elastic arm is provided as the upward-extending elastic arm 17a. With this configuration, even if the downward-extending elastic arms 17b are made of a soft rubber-like elastic body, the elastic support arms 17 can provide bearing capacity in collaboration with each other and support the imaging device 11 appropriately in a vibration-proof manner. The length of the upward-extending elastic arm 17a when the upward-extending elastic arm 17a is supporting the imaging device 11 is preferably more than 100% and 120% or less of the length before the upward-extending elastic arm 17a is mounted on the unmanned aircraft 1. Note that the elongation of the elastic support arm 17 when the imaging device 11 is mounted is referred to as "elongation during stretching". If the result is 100% or less, the elastic support arm 17 does not stretch easily, which tends to transmit vibrations readily. If the result exceeds 120%, the position of the imaging device 11 may become instable and a concern for the durability of the antivibration device 12 may arise.

In the present embodiment described above, the inner fixing portion 15 at the center of the antivibration device 12 is attached to the imaging device 11 and the outer fixing portion 16 at the periphery of the antivibration device 12 is attached to the housing 13. The elastic support arms 17 that connect the inner fixing portion 15 and the outer fixing portion 16 to each other are positioned therebetween and support the imaging device 11 with respect to the housing 13 in a vibration-proof manner. Thus, the antivibration device 12 attenuates vibrations that are transmitted from the housing 13 to the imaging device 11 during flight or the like and also attenuates shaking caused by inertial forces acting on the imaging device 11 during flight. Thus, the durability of the imaging device 11 can be improved, and the imaging quality of still images or video images taken by the small-size and lightweight imaging device 11 can be improved in spite of being used with the unmanned aircraft 1 that can assume various flying postures.

As a more specific preferred mode, the dimension of the antivibration device 12 may be set such that the diameter of the inner fixing portion 15 is 1 to 3 cm, the diameter of the outer fixing portion is 3 to 5 cm, and the thickness is 0.5 to 2 cm for an imaging device 11 that has a weight of 5 to 20 g and of which the sum of length, width, and height (in the case of columnar shape, the sum of doubled diameter and height) is 6 to 11 cm.

### Modification Examples of Embodiment

Modification examples of the above embodiment will be described.

### Modification Example 1 of Antivibration Device

The outer fixing portion 16 of the antivibration device 12 is formed as an endless loop (endless ring). However, as is an outer fixing portion 16a of an antivibration device 12a illustrated in Fig. 6, the outer fixing portion 16 may be formed as end portions of elastic support arms 17 that extend from the inner fixing portion 15 and are separated from each other. In this case, the ends of the elastic support arms 17 that extend like cantilevers serve as the outer fixing portion 16a.

### Modification Example 2 of Antivibration Device

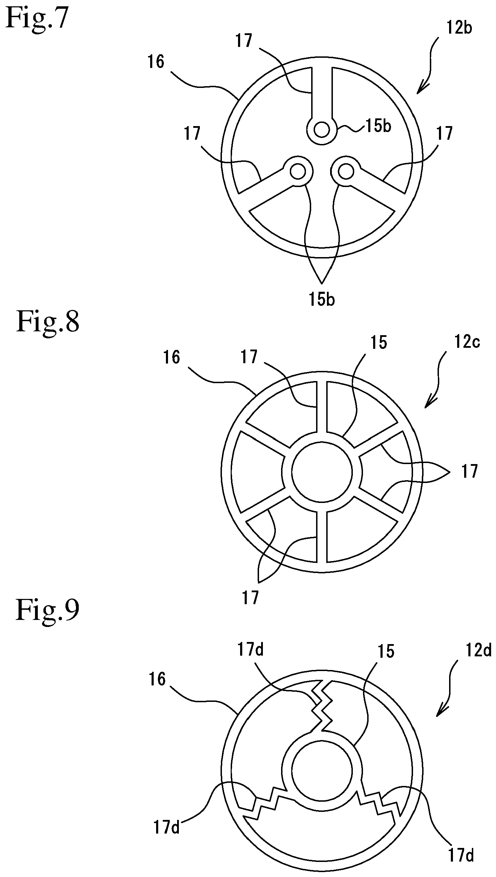

The inner fixing portion 15 of the antivibration device 12 is formed as an endless loop (endless ring). However, as is an inner fixing portion 15b of an antivibration device 12b illustrated in Fig. 7, the inner fixing portion may be formed as end portions of elastic support arms 17 that extend inward from the outer fixing portion 16 formed as an endless ring and that are separated from each other.

### Modification Example 3 of Antivibration Device

In the antivibration device 12, three elastic support arms 17 are formed radially at 120-degree spacing. However, six elastic support arms 17 may be formed radially at 60-degree spacing, as is an antivibration device 12c illustrated in Fig. 8. The spacing is not limited to 60 degrees but may be any other suitable angle.

### Modification Example 4 of Antivibration Device

In the antivibration device 12, three elastic support arms 17 are formed into columnar shapes. However, the elastic support arms may be serpentine-shape elastic support arms 17d, as is an antivibration device 12d illustrated in Fig. 9. Compared with the elastic support arms 17 having straight columnar shapes, the elastic support arms 17d can elastically deform more flexibly for a lightweight imaging device 11 due to the serpentine shape with a repetitive bending pattern.

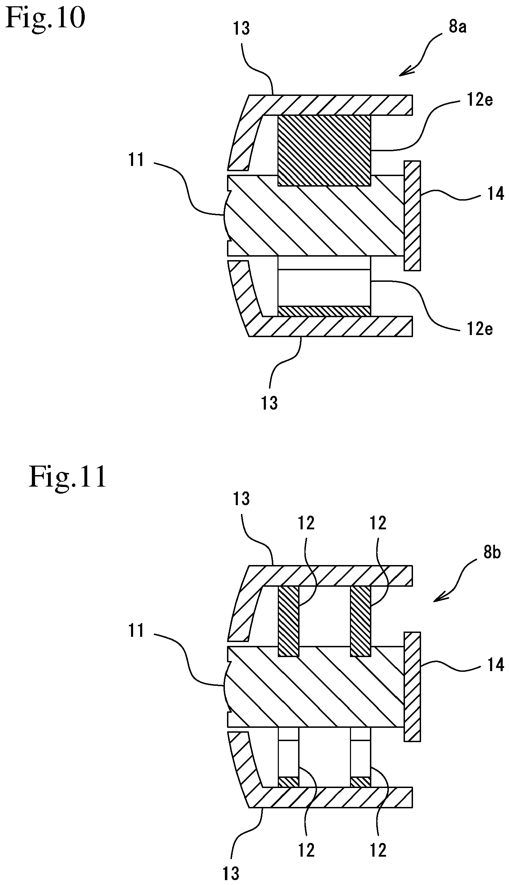

As illustrated in Fig. 10, in the case of an imaging unit 8a having a relatively elongated imaging device 11, the antivibration device may be formed into an antivibration device 12e that has a thickness to match the length of the imaging device 11. The antivibration device 12e is formed into a columnar shape with the height in the thickness direction. The antivibration device 12e has the same shape in plan view as that in view (b) of Fig. 5, while the thickness of the antivibration device 12e is larger than that illustrated in view (a) of Fig. 5. Similarly, in the case of a relatively elongated imaging device 11, as is an imaging unit 8b illustrated in Fig. 11, a plurality of antivibration devices 12 may support the imaging device 11.

The antivibration device 12 is integrally formed of a rubber-like elastic body by molding. However, the inner fixing portion 15, the outer fixing portion 16, and a plurality of the elastic support arms 17 may be made of separate materials. Since the elastic support arms 17 most contribute to vibration attenuation, the elastic support arms 17 are made of a rubber-like elastic body, while the inner fixing portion 15 and the outer fixing portion 16 may be made of a material, such as a hard resin or a metal. Alternatively, the elastic support arms 17 and other members may be made of different rubber-like elastic bodies with different hardness or of different materials.

In the above embodiment, it is described by way of example that the imaging device 11 is fixed to the antivibration device 12 by fitting the groove on the imaging device 11 into the inner fixing portion 15 and the antivibration device 12 is fixed to the housing 13 by using a double-sided adhesion tape. However, the method of fixation is not limited to these but may be any other suitable method. For example, various methods of fixation may be adopted, including fixation by using an adhesive, a double-sided adhesive tape or other adhesive tapes, fixation by forming a shape such as a groove, or fixation by using welding, magnetism, etc.

### Reference Signs List

1 unmanned aircraft
2 main body
2a housing
3 rotor
4 arm
5 control board
5a, 5b connector
6 antivibration member
7 battery pack
8 imaging unit
8a, 8b imaging unit (modification example)
11 imaging device
12 antivibration device
12a, 12b, 12c, 12d, 12e antivibration device (modification example)
13 housing
14 imaging board
15 inner fixing portion
15b inner fixing portion (modification example)
16 outer fixing portion
16a outer fixing portion (modification example)
17 elastic support arm
17a upward-extending elastic arm
17b downward-extending elastic arms
17d elastic support arm

## Claims

1. An antivibration device for an imaging device mounted on an unmanned aircraft, the antivibration device comprising:
an inner fixing portion to be fitted on the imaging device;
an outer fixing portion to be mounted on an airframe of the unmanned aircraft;
a plurality of elastic support arms that are made of a rubber-like elastic body and that connect the inner fixing portion and the outer fixing portion to each other, wherein
the elastic support arms extend radially with the imaging device being at a center and elastically support the imaging device with respect to the airframe.

2. The antivibration device according to Claim 1, wherein the plurality of elastic support arms are disposed radially and spaced from each other at regular intervals.

3. The antivibration device according to Claim 1 or Claim 2, wherein the inner fixing portion, the plurality of elastic support arms, and the outer fixing portion are disposed in one plane.

4. The antivibration device according to any one of Claim 1 to Claim 3, wherein the inner fixing portion is attached to the imaging device at a position of center of gravity of the imaging device.

5. The antivibration device according to any one of Claim 1 to Claim 4, wherein
the plurality of elastic support arms are constituted by
an upward-extending elastic arm that extends upward from the inner fixing portion in a vertical direction of the unmanned aircraft and that suspends the imaging device and thereby supports the imaging device from above, and
a downward-extending elastic arm that extends downward from the inner fixing portion and supports the imaging device from below.

6. The antivibration device according to any one of Claim 1 to Claim 5, wherein the elastic support arms are formed into serpentine shapes.

7. An unmanned aircraft comprising:
an airframe;
an imaging device mounted on the airframe; and
an antivibration device disposed between the airframe and the imaging device, wherein
the antivibration device includes
an inner fixing portion to be fitted on the imaging device,
an outer fixing portion to be mounted on the airframe, and
a plurality of elastic support arms that are made of a rubber-like elastic body and that connect the inner fixing portion and the outer fixing portion to each other, and
the elastic support arms extend radially with the imaging device being at a center and elastically support the imaging device with respect to the airframe.

8. The unmanned aircraft according to Claim 7, wherein the airframe is a multicopter.
